Europäisches Patentamt

European Patent Office

Office européen des brevets

(11) Publication number: **0 351 145 B1**

(12) **EUROPEAN PATENT SPECIFICATION**

(45) Date of publication of patent specification: **23.02.94**   (51) Int. Cl.5: **B27L 9/00**, A61C 15/02, B27K 3/08

(21) Application number: **89306909.6**

(22) Date of filing: **07.07.89**

(54) **Method for impregnating woodsticks.**

(30) Priority: **11.07.88 GB 8816476**

(43) Date of publication of application:
**17.01.90 Bulletin  90/03**

(45) Publication of the grant of the patent:
**23.02.94 Bulletin  94/08**

(84) Designated Contracting States:
**BE CH DE FR GB IT LI LU NL SE**

(56) References cited:
**DE-A- 2 227 652**
**DE-A- 2 629 043**
**DE-A- 2 925 020**
**GB-A- 589 016**

(73) Proprietor: **WESTONE PRODUCTS LIMITED**
**104-112 Marylebone Lane**
**London W1M 5FU(GB)**

(72) Inventor: **Wainwright, Robert Sedgewick**
**West Rowallan**
**Farnham Lane**
**Haslemere Surrey(GB)**

(74) Representative: **Paget, Hugh Charles Edward**
**MEWBURN ELLIS**
**2 Cursitor Street**
**London EC4A 1BO (GB)**

Rank Xerox (UK) Business Services
(3.10/3.09/3.3.3)

**Description**

The present invention relates to a method for impregnating woodsticks for use in dental hygiene (hereinafter termed interdental woodsticks).

Interdental woodsticks, also known as gum massagers, are generally about 5-10 cm long, and may be tapered at one or both ends at which the cross sectional dimensions are around 0.5-5 mm. These woodsticks are useful for cleaning gaps between teeth, gum massage and for general oral hygiene and are commonly impregnated with flavourings. It is also known to impregnate woodsticks with fluoride compounds. Such flavourings or fluoride compounds are desorbed in the mouth.

Current methods for impregnating interdental woodsticks involve forming a liquid preparation of a medicament or antiseptic and then either spraying the woodsticks with the liquid or soaking them in the liquid for a given length of time, between e.g. 3 hours and 3 days, and then removing the woodsticks from the liquid and drying them, e.g. by heating or air drying. A soaking process is disclosed for example in DE-A-2925020.

The present invention is specified by claim 1.

Any batch of woodsticks varies in the hardness of the wood. If a method of impregnation by steeping is used then varying amounts of additive enter. This can be overcome by soaking to saturation but this takes a very long time, e.g. many days, and there is no way of telling at what point complete saturation has been reached. Use of the present method achieves saturation within minutes and thus provides a predictable result. Moreover, the results are repeatable between batches providing a product of remarkable consistency.

Use of vacuum impregnation is known for applying preservatives to logs. However, such art varies from the present field in both scale and purpose. In the art the object is to impregnate large pieces of wood with a preservative such as creosote so that the impregnant stays within the wood. In the present case the aim is for the impregnant to be desorbed into the mouth.

The comparative sizes of wood used in the prior art and the present case call for entirely different techniques for effecting the impregnation. Logs or posts cannot be done in large batches. There is no desire to attain consistency between impregnated items and the size precludes saturation over short periods of time. Furthermore, the application of the products in dental hygiene places an added requirement for sterile conditions which does not arise in the prior art.

In the present invention, the liquid preparation can contain an additive dissolved, mixed or suspended in liquid. After separation of the non-impregnated liquid preparation and the woodsticks, the woodsticks may be dried so that only the additive remains or, if the additive is a liquid, the surface of the woodstick is dry.

The method is conveniently performed by locating the liquid preparation in a chamber and applying reduced pressure to the chamber for a predetermined length of time while the woodsticks are at least partly immersed. When the reduced pressure is returned to ambient, the woodsticks may be removed from the liquid and dried. Alternatively, the woodsticks may be lifted from the liquid while still under reduced pressure.

The method of the present invention shows a remarkable consistency for given conditions and produces woodsticks having a predetermined desired additive content. The conditions - additive concentration, degree of pressure reduction, length of time of pressure reduction - may be varied to control the quantity of additive absorbed into the woodsticks.

The woodsticks impregnated by the present invention may be pretreated. Generally, such woodsticks are in the range 3-8 cm long, 0.05-0.5 cm both in thickness and in width. Most preferably the woodsticks are 55 mm long, 2.6 mm average height and 1.6 mm average thickness. Interdental woodsticks may taper to a point at one or both ends.

Woodsticks generally weigh 20-300 mg each or more preferably 30-120 mg. Most preferably they weigh on average 50-60 mg.

Various woods are used to make woodsticks and the invention is applicable to all such woods. The commonest are birch and balsa. The applicants favour tilia (lime).

A variety of additives are used in interdental woodsticks, and all can be applied by the present invention. Flavours tend to be in the form of oils and optionally may be mixed with water to form emulsions. Flavourings, both as an undiluted oil, or as an oil diluted with oil or as an emulsion may be used in the present invention. Pharmaceutical additives include prophylactics such as sodium fluoride, antiseptics or bacteriocides such as chlorhexadine or quaternary $NH_4+$, tartar control agents such as zinc citrate trihydrate or powder pyrophosphate complex, antiacids such a urea or potassium phosphate, desensitizing agents such as strontium chloride, and re-mineralising agents. Solutions of these compounds are typically prepared by dissolving in a water, alcohol or oil-based solvent. Soluble foodstuffs may also be used as additives. Volatile flavourings such as peppermint are suitably restrained from evaporating by packaging the woodsticks individually in air tight material.

Generally, suitable pressure reduction is from atmospheric to 10 kPa or lower and preferably is to within the range 1 to 5 kPa. Most preferred reduced pressure is in the range 2 to 4kPa.

The length of time that the reduced pressure is maintained while the woodsticks contact the liquid preparation may vary from a few seconds to about an hour. For lower pressures, less time at that pressure is required. Preferably, reduced pressure is maintained for between 10 seconds and 1 hour and at preferred pressure levels for between 30 seconds and 10 minutes.

For low pressures e.g. in the order of 3 kPa, the pressure reduction is best done gradually. It is preferred that the liquid preparation does not boil.

The application of reduced pressure to the wood draws air out of the pores in the wood. The liquid preparation is then able to enter instead. Depending on the conditions, the wood may be saturated. Unlike known methods where the liquid preparation is allowed to diffuse into the woodsticks, a method in accordance with the present invention is carefully controlled and the results are repeatable.

An embodiment of the invention will now be described by way of example.

EXAMPLE I

Approximately 200 interdental woodsticks were placed in a 500ml glass beaker, containing a 2% sodium fluoride solution incorporating a red dye. A metal disc was placed over the woodsticks to keep them submerged in the solution.

The beaker and its contents were then placed in a glass desiccator which was sealed.

The desiccator was then evacuated gradually, (to avoid boiling off the solution too quickly) to 35 mbar. This vacuum was held for 5 minutes and then released.

The woodsticks were removed from the liquid and air dried.

Initial examination showed that the red dye had completely penetrated the woodsticks.

The woodsticks were then subjected to aqueous extraction to determine the quantity of NaF taken up into the woodsticks. The extraction was carried out at 15°C and at 35-37°C. The aqueous solution was analysed at intervals for sodium fluoride content, initially after short intervals of time, with a final analysis being carried out after an hour.

The results are shown in Table I below.

TABLE I

| SHORT TIME SCALE : 5 COMBINED STICKS | | |
|---|---|---|
| AQUEOUS EXTRACTION TIME | NaF RELEASE PER STICK (MG) | |
| | 15°C | 35-37°C |
| 10 SEC | 0.03 | 0.12 |
| 30 SEC | 0.12 | 0.17 |
| 60 SEC | 0.23 | 0.41 |
| 2 MIN | 0.37 | 0.56 |
| 3 MIN | 0.49 | 0.71 |
| 4 MIN | 0.50 | 0.82 |
| 5 MIN | 0.61 | 0.90 |
| 60 MIN | 1.53 | 1.54 |

The results for the two extractions show a faster release of sodium fluoride at 35-37°C than at 15°C. However, the quantity released for each of the extractions after one hour is remarkably similar, showing the consistency of impregnation by this method.

EXAMPLE II

Three batches of woodsticks were impregnated at each of two concentrations of NaF using a method similar to that of Example I above. Batches A, B and C were prepared using a 3% NaF solution, whereas Batches D, E and F were prepared in a 4% NaF solution.

Extraction was carried out on woodsticks from various batches prepared at 23°C and the quantity of NaF extracted was measured at 5 minutes and again after 24 hours using an ion selective electrode (ISE)

EP 0 351 145 B1

method with external calibration. A control sample using unimpregnated woodsticks was done for comparison. The results are shown in Table II.

TABLE II

| Sample | Extractable NaF (mg) | |
|---|---|---|
| | 5 minutes | 24 hours |
| A | 0.37 | 1.59 |
| B | 0.31 | 1.41 |
| C | 0.28 | 1.43 |
| D | 0.61 | 2.69 |
| E | 0.47 | 2.64 |
| F | 0.72 | 2.83 |
| Control | <0.01 | <0.01 |

EXAMPLE III

Two months after the results from Example II, woodsticks from batches D, E, F and a batch G were assayed for extractable NaF together with blank sticks as a control. Extraction was carried out at 35°C using an incubator, 5-6°C using a refrigerator and 16-18°C on a cool laboratory bench. The same ISE method for measurement at 5 minutes and 24 hours was used as in Example II. The results are shown in Table III.

## TABLE III

### 5 minutes extractable NaF (mg)

| Sample | 5-6°C | 16-18°C | 35°C |
|---|---|---|---|
| D | 0.44 | 0.70 | 0.85 |
| E | 0.43 | 0.51 | 0.56 |
| F | 0.59 | 0.55 | 0.81 |
| G | 0.39 | 0.76 | 0.90 |
| Control | <0.01 | <0.01 | <0.01 |

### 24 hour extractable NaF (mg)

| Sample | 5-6°C | 16-18°C | 35°C |
|---|---|---|---|
| D | 2.57 | 2.67 | 2.69 |
| E | 2.87 | 2.76 | 2.60 |
| F | 2.82 | 2.90 | 2.78 |
| G | 2.63 | 2.75 | 2.39 |
| Control | <0.01 | <0.01 | <0.01 |

4

EXAMPLE IV

At the end of the third month after the extraction of Example II, further sticks from batches D and G were assayed for NaF content. The extraction was carried out at 15°C and the fluoride measured using the ISE method.

TABLE IV

| Sample | Extractable NaF (mg) | |
|---|---|---|
| | 5 mins | 24 hours |
| D | 0.79 | 2.74 |
| G | 0.69 | 2.80 |
| Control | <0.01 | <0.01 |

The results from these three examples show a remarkable consistency in quantity of fluoride released over a given period. It also illustrates the stability of the product over time showing that it will have a useful shelf life.

**Claims**

1. A method of impregnating interdental woodsticks comprising subjecting the woodsticks to pressure reduction and contacting them at reduced pressure with an impregnating liquid preparation which comprises a pharmaceutical additive or a flavouring so as to absorb the pharmaceutical additive or the flavouring into the material of the woodsticks through the contacting surfaces thereof.

2. A method according to claim 1 wherein the woodstick is contacted with the liquid preparation prior to said pressure reduction, and both are subjected to the pressure reduction while the contact is maintained.

3. A method according to claim 1 or claim 2 wherein additive material is dissolved, mixed or suspended in the liquid and after the reduced pressure has been applied at least the surface of the woodstick is dried so that the additive remains in the woodstick.

4. A method according to any one of claims 1 to 3 wherein the woodstick is removed from contact with the liquid before the reduced pressure is restored to ambient pressure.

5. A method according to any of the preceding claims wherein the reduced pressure is below 10 kPa.

6. A method according to any of the preceding claims wherein the reduced pressure is between 1 and 5 kPa.

7. A method according to any one of the preceding claims wherein the reduced pressure is maintained with said woodstick in contact with the liquid preparation for between 5 seconds and 2 hours.

8. A method according to any one of the preceding claims wherein the reduced pressure is maintained with said woodstick in contact with the liquid preparation for between 30 and 600 seconds.

**Patentansprüche**

1. Verfahren zum Imprägnieren von Holzstäben zur Mund- und Zahnhygiene, bei dem die Holzstäbe einer Druckverminderung unterworfen und sie bei vermindertem Druck mit einem flüssigen Imprägnierpräparat in Kontakt gebracht werden, das ein pharmazeutisches Additiv oder einen Geschmacksstoff umfaßt, sodaß das pharmazeutische Additiv oder der Geschmacksstoff in das Material der Holzstäbe absorbiert wird, indem deren Oberflächen kontaktiert werden.

**2.** Verfahren nach Anspruch 1, worin der Holzstab vor der genannten Druckverminderung mit dem flüssigen Präparat in Kontakt gebracht wird und beide der Druckverminderung unterworfen werden, während der Kontakt aufrechterhalten wird.

**3.** Verfahren nach Anspruch 1 oder 2, worin Additivmaterial in der Flüssigkeit aufgelöst, eingemischt oder suspendiert wird und, nachdem der verminderte Druck ausgeübt worden ist, zumindest die Oberfläche des Holzstabs getrocknet wird, sodaß das Additiv im Holzstab verbleibt.

**4.** Verfahren nach einem der Ansprüche 1 bis 3, worin der Holzstab aus dem Kontakt mit der Flüssigkeit entfernt wird, bevor der verminderte Druck wieder auf Umgebungsdruck gebracht wird.

**5.** Verfahren nach einem der vorhergehenden Ansprüche, worin der verminderte Druck unter 10 kPa liegt.

**6.** Verfahren nach einem der vorhergehenden Ansprüche, worin der verminderte Druck zwischen 1 und 5 kPa liegt.

**7.** Verfahren nach einem der vorhergehenden Ansprüche, worin der verminderte Druck aufrechterhalten wird, während der genannte Holzstab für zwischen 5 Sekunden und 2 Stunden mit dem flüssigen Präparat in Kontakt steht.

**8.** Verfahren nach einem der vorhergehenden Ansprüche, worin der verminderte Druck aufrechterhalten wird, während der genannte Holzstab für zwischen 30 und 600 Sekunden mit dem flüssigen Präparat in Kontakt steht.

**Revendications**

**1.** Méthode d'imprégnation de bâtonnets de bois interdentaires, consistant à soumettre les bâtonnets de bois à une réduction de pression et à les mettre en contact à pression réduite avec une préparation liquide d'imprégnation qui comprend un additif pharmaceutique ou un aromatisant afin d'absorber l'additif pharmaceutique ou l'aromatisant dans le matériau des bâtonnets de bois par les surfaces de contact.

**2.** Méthode selon la revendication 1, où le bâtonnet de bois est mis en contact avec la préparation liquide avant ladite réduction de pression, et les deux sont soumis à la réduction de pression alors que le contact est maintenu.

**3.** Méthode selon la revendication 1 ou la revendication 2, où la matière additive est dissoute, mélangée ou mise en suspension dans le liquide et, après avoir appliqué la pression réduite, au moins la surface du bâtonnet de bois est séchée de manière que l'additif reste dans le bâtonnet de bois.

**4.** Méthode selon l'une quelconque des revendications 1 à 3, où le bâtonnet de bois est enlevé du contact avec le liquide avant que la pression réduite ne soit restaurée à la pression ambiante.

**5.** Méthode selon l'une quelconque des revendications précédentes, où la pression réduite est inférieure à 10 kPa.

**6.** Méthode selon l'une quelconque des revendications précédentes, où la pression réduite est comprise entre 1 et 5 kPa.

**7.** Méthode selon l'une quelconque des revendications précédentes, où la pression réduite est maintenue avec ledit bâtonnet de bois en contact avec la préparation liquide pendant entre 5 secondes et 2 heures.

**8.** Méthode selon l'une quelconque des revendications précédentes, où la pression réduite est maintenue avec ledit bâtonnet de bois en contact avec la préparation liquide pendant 30 à 600 secondes.